# EUROPEAN PATENT SPECIFICATION

(11) **EP 3 644 003 B1**
(45) Date of publication and mention of the grant of the patent: **14.08.2024**
(21) Application number: 18820308.7
(22) Date of filing: 30.05.2018
(51) Int. Cl.: F28F 9/02, F28F 1/02, F28F 1/40, F28F 21/08, F28D 1/053, F28D 1/03, F28F 1/12, F28F 9/16

(54) **HEAT TRANSFER DEVICE AND METHOD FOR MANUFACTURING SAME**
WÄRMETRANSFERVORRICHTUNG UND VERFAHREN ZUR HERSTELLUNG DAVON
DISPOSITIF DE TRANSFERT DE CHALEUR ET SON PROCÉDÉ DE FABRICATION

(30) Priority: 22.06.2017 DE 102017113849; 15.05.2018 DE 102018111585
(43) Date of publication of application: 29.04.2020
(73) Proprietor: Hanon Systems, Daejeon 34325 (KR)
(72) Inventor: MARTINI, Joerg, 50259 Pulheim (DE); KOLLAR, Gregus Jan, 90901 Skalica (SK); LAPCIK, Josef, 68704 Susice (CZ); KOLOMAZNIK, Milan, 68725 Hluk (SK)
(74) Representative: SSM Sandmair
(86) International application number: PCT/KR2018/006129
(87) International publication number: WO 2018/236063

(56) References cited:
- DE-A1- 102004 036 020
- FR-A1- 3 037 643
- JP-A- 2002 327 994
- JP-A- 2007 298 201
- JP-A- 2013 108 686
- KR-A- 20080 033 942
- US-A1- 2016 054 069
- US-B1- 6 209 202
- US-B1- 6 810 951

## Description

The invention relates to a device for the transfer of heat in particular for application in a motor vehicle. The heat is herein preferably transferred between a coolant as a first fluid, for example water or a mixture of water and glycol, and air as a second fluid. The device comprises an assembly of tube elements for the conduction of the first fluid as well as at least one tube plate with passage apertures for passing the tube elements through the tube plate. FR 3037643 discloses a heat exchanger having the features of the preamble of claim 1.

The invention relates, moreover, to a system and a method for the manufacture of a device for heat transfer.

Coolant-air heat exchangers known in prior art for transferring heat from a coolant of a coolant circuit to ambient air are applied in so-called high-temperature coolant circuits for discharging the heat of an internal combustion engine. The coolant-air heat exchangers constructed of aluminum comprise a number of tubes secured in tube plates, as well as fins and side elements and coolant collectors disposed across crimping joints. These diverse elements must be assembled into heat exchangers. The tubes oriented in parallel and arranged in a matrix serve for the conduction of liquid coolant between the collectors. The coolant collectors disposed on both sides at the ends of the tubes are conventionally sealed against the tubes or tube plates by means of ethylene propylene diene monomer sealing elements, abbreviated as EPDM seals. The tubes, tube plates, fins and side elements are either fabricated as so-called plug coolers employing a plug method, or are fully soldered as so-called solder coolers.

When using the soldering method in a controlled atmosphere, abbreviated as CAB or Controlled Atmospheric Brazing, a matrix of tubes and fins is interconnected and also connected to tube plates, if appropriate, as a metallic element of a collector. In the plug method the welding or soldering of adjacent structural metal parts is avoided by using a mechanical assembly procedure or MA of the matrix and the collector.

The air absorbing the heat from the coolant flows along the outside of the tubes and thus between the tubes. The fins or ribs disposed on the outside between the tubes serve to enlarge the air-side heat transfer area and thus to raise the heat transfer capacity.

The known coolant-air heat exchangers have inadequate continuous service capability against rapidly changing temperatures of the coolant. In extreme application cases the coolant-air heat exchanger may be rapidly cooled to temperatures in the range of -20°C to -10°C and, due to rapidly opening valves in the coolant circuit, may be charged with coolant at a temperature of 120°C. The coolant-air heat exchangers are herein subjected to extreme temperature alternations and experience thermal shock. Due to time-delayed thermal expansions of the individual tubes, extremely high material stresses occur.

While, due to their friction-bearing connections as elements of the collectors between the tubes and the tube plates, plug coolers have high resistance capabilities against temperature changes of the coolant; however, due to their friction-locked connections between the tubes and the fins, they also have lower cooling capacities than soldered coolers. Soldered coolers, on the other hand, due to rigid solder connections between the tubes and the tube plate, have limited durability under temperature changes and the thermal expansions of individual tubes entailed therein.

DE 10 2015 113 905 A1 discloses a heat exchanger and a method for the fabrication and assembly of a heat exchanger, in particular of an air flow heat exchanger with a mechanically mounted collector for application in motor vehicles. The heat exchanger comprises a fully metal-bonded matrix of a multiplicity of parallel metal tubes and a multiplicity of metal ribs. The tubes comprise a heat transfer section with an oblong cross section form, in each instance with two opposing longer sides and two shorter sides. At least one tube is connected on a first end section with a first collector by means of at least one flexible element which extends about the first end section of the tube, in order to provide the sealing and to enable relative movement between the mechanically joined tube and the first collector due to the thermal expansion and contraction of the matrix.

Herein, by using a method in which the tubes and fins are soldered without tube plates and the tube plates are subsequently plugged onto the tube under press fit and sealed in sealings, a synergy of the fabrication methods of a plug cooler and a solder cooler are described. As a consequence of the degraded material properties due to the exposure to temperatures of more than 600°C during the soldering process in the solder furnace, the tubes, in particular in the region of the ends, cannot permanently withstand the counterforces applied through the sealing by press fit with the demand to ensure the sealing fit over the entire circumference of the tube.

The heat exchangers and methods of their production known in prior art are limited to the use of tubes, in particular of welded tubes, with a tube breadth of approximately 10 mm to 11 mm in order to withstand the sealing pressure. Heat exchangers or matrices with greater breadth are, for example, constructed of several tube layers or tube planes.

Conventional aluminum tubes of heat exchangers applied in motor vehicles are either welded or folded and hard soldered. However, welded tubes can only be fabricated up to a maximal breadth in the range of 14 mm to 20 mm since the tubes with greater broadness tend to bulge up and collapse especially during high pressure-pulse loading.

Demands and development trends now lead to the implementation of welded tubes with greater breadth, for example with a breadth up to 40 mm, to meet higher demands made of the cycle stability and cleanness of the flow channels formed in the tubes which, for example, can be impaired through residues of fluxing agents, as well as escalating requirements made of the heat transfer. For adequate durability, flat tubes of aluminum for applications with internal pressures up to 4 bar have to be built with a central internal structure element.

For heat exchangers with only one tube plane, extruded, flanged or welded B-tubes are under consideration. The application of B-tubes, termed so due to the flow cross section in the form of a B, for the heat exchanger with press fit between tube and coolant collector has failed in the past due to leakage between the seal and the tubes at the seam of the B-tube.

The invention addresses the problem of providing a device for the efficient heat transfer between two fluids, in particular between a liquid fluid as the coolant and air, as well as a method for the manufacture and assembly of the device. The heat exchanger is to have maximal impermeability even under large temperature alternations, which means the heat exchanger is to have high thermal shock resistance. The heat exchanger is to be capable of transferring maximal heat capacity at minimal constructed size or minimal installation space requirement. Moreover, the heat exchanger is to be of minimal weight as well as cause minimal production and material costs.

The problem is resolved through the subject matters with the characteristics of the independent patent claims. Further developments are specified in the dependent patent claims.

The problem is resolved through a device according to the invention for the heat transfer between a first fluid and a second fluid. The device comprises an assembly of tube elements for conducting the first fluid through them, with at least one tube plate with passage apertures as well as at least one sealing element with passage apertures. The tube elements are in each instance developed with a first, nondeformed region and at least a second, deformed region disposed at one end of the tube element.

According to the concept of the invention, the tube elements are each guided through the passage apertures. The sealing element is herein in each instance disposed between an outer surface of the second region of a tube element and an edge of a rim of the passage aperture of the tube plate. With the interspaced sealing element the connection of the at least one tube plate with the passage apertures is impermeable to fluids. The form of each of the passage apertures of the tube plate and of the sealing element correspond to one another as well as to an outer form of the tube elements. Herein one tube element is advantageously passed through a passage aperture such that to each end of a tube element in each instance precisely one passage aperture is assigned.

The tube elements are in each instance developed as flat tubes of a metal with flow channels for conducting through them the first fluid, in particular a coolant. The flow channels are herein separated from one another by at least one internal structure element. In the second region the cross section of the tube elements is flared in a plane oriented perpendicularly to a longitudinal direction.

The tube elements consequently comprise with the first, nondeformed region a region of heat transfer in which there is flow of the second fluid, in particular air, circulating about the tube element, and with the second, deformed region advantageously a region of a connection with the tube plate.

According to the invention, the tube element is developed as a multi-channel flat tube with a multiplicity of internal structure elements which, developed as a web, in each instance separate two adjacently placed flow channels for the conduction of the first fluid. The cross section of the tube element is preferably developed with the flaring exclusively in regions of the flow channels. According to a further development of the invention, the tube element has in a region of maximal flaring a height in the range of 3.0 mm to 5.6 mm and in the connection region a height in the range of 1.5 mm to 2.1 mm. The total breadth of the tube element is advantageously in the range of 20 mm to 55 mm, in particular in the range of 20 mm to 26 mm.

According to the invention, the tube element comprises at least one groove extending in the longitudinal direction on an upper side as well as on a lower side each with a connection region. The internal structure element is herein developed by at least one weld joint in the connection region. The weld joint of the tube element is advantageously either continuous or developed as a fluted spot weld pattern.

The connection region terminates at a predetermined distance from at least one end of the tube element such that the second region has a planar upper side as well as a planar lower side.

A further advantageous embodiment of the invention comprises that the tube plate is developed as a side wall element of a collector of the device for heat transfer.

The device for heat transfer can preferably be developed with two tube plates with passage apertures as well as with two sealing elements with passage apertures. The tube plates are in each instance connected fluidically impermeably with the tube elements, wherein the passage apertures in each instance correspond in their form with an outer form of the tube elements and each tube element is disposed with a first end having been guided through a passage aperture developed in a first tube plate and with a second end having been guided through a passage aperture developed in a second tube plate.

The tube elements are preferably developed in a straight line and advantageously of an aluminum alloy.

According to a further development of the invention, the tube elements are aligned in one row or in several rows within the assembly.

The tube elements of a row are preferably disposed next to one another and in parallel as well as with their broad sides toward one another such that between directly adjacent tube elements in each instance one flow path for the second fluid, in particular the air, is developed. In the flow paths of adjacently disposed tube elements advantageously fins or ribs are disposed for changing the flow cross section and/or for enlarging the area for heat transfer. The fins or ribs are preferably developed of an aluminum alloy.

The advantageous embodiment of the invention enables the use of a device according to the invention for heat transfer as a coolant-air heat exchanger in a coolant circuit, in particular in an engine coolant circuit of a motor vehicle.

The problem is also resolved through a system according to the invention for the manufacture of a device for heat transfer between a first fluid and a second fluid with the above characteristics. The system comprises solder tools for joining an assembly of tube elements with interspaced fins as well as means for flaring ends of the tube elements for connecting the tube elements with a tube plate. The solder tools are developed with a retaining frame with at least one tube-fixing element for retaining the tube elements at an end face as well as plug-in elements disposed on the tube-fixing element. The tube elements can herein be plugged with the open cross sections of the end faces onto the plug-in elements. The means for flaring the ends of the tube elements are developed from a stamping element with guide elements and flaring elements or with pin elements for penetration with a first end into the open cross sections of the end faces of the tube elements. The guide elements in connection with the flaring elements or the pin elements are herein spaced apart oriented correspondingly with the disposition of the tube elements. The pin elements are fixed through base elements and coupled with one another at second ends, distal to the first ends, across a connection element. The guide elements are connected with the flaring elements and the flaring elements with the stamping elements.

According to a further development of the invention, the tube-fixing elements are disposed on the retaining frame such that they are movable in the longitudinal direction of the tube elements. The tube-fixing elements are advantageously fixed on the retaining frame across threaded connections, which are developed in particular as rivets or bolts or screws, developed with an elongated hole.

A further preferred embodiment of the invention comprises that the pin elements are connected with the connection element across securement elements, such as rivets or bolts or screws.

The problem is furthermore resolved through a method according to the invention for the manufacture of a device for heat transfer between a first fluid and a second fluid, with the above characteristics. The method comprises the following steps:
- forming tube elements with in each instance a connection region with a gap on an upper side by milling and folding as well as closure of the gap as well as planing of the surface of the upper side by means of welding, in particular laser welding, or forming a tube element with grooves and welding within the grooves,
- connecting a multiplicity of tube elements into an assembly by soldering,
- aligning the assembly of tube elements, a sealing element and a tube plate with respect to means for flaring the ends of the tube elements, wherein
   - the sealing element is in contact on the tube plate and passage apertures of the sealing element and of the tube plate correspond to one another,
   - the tube elements with second formable regions project through the passage apertures, and
   - guide elements of a stamping element or pin elements are disposed with their ends in the direction of open end faces of the second, formable regions of the tube elements, wherein the guide elements oriented in one direction and flaring elements or the pin elements are oriented in a longitudinal direction of the tube elements and to each flow channel a guide element with a flaring element or a pin element is assigned,
- moving the stamping element or the pin elements in a direction of motion, wherein into each flow channel a guide element or a pin element is introduced and the stamping element or the pin element is in each instance centered within the flow channel as well as the flaring element or the pin elements widen the cross sections of the flow channels of the tube element, wherein the wall of the tube element in each instance is pressed against the rim of a passage aperture of the tube plate and the sealing element is disposed between the wall of the tube element and the edge of the passage aperture of the tube plate, as well as
- removing the stamping elements or the pin elements out of the tube elements.

In summary, the device according to the invention for heat transfer and its manufacture comprise diverse advantages:
- expanding the application of the CAB/MA production principle within the framework of available tube portfolios by using tube elements with breadth > 11 mm,
- transferring a maximal heat capacity at minimal constructed size or at minimal installation space requirement, which means at optimal ratio of transferable heat capacity to building volume, in particular the tube elements permit increasing the heat capacity by developing a single tube row - comparable devices are implemented with at least two tube rows, thereby
- reduction of complexity and material expenditures and therewith of the cost of production,
- minimal weight,
- maximal impermeability even at large temperature alternations, which means high resistance to thermal shock as well as
- application and operation possible even at high pressure-pulse loading.

Further details, characteristics and advantages of embodiments of the invention will become evident based on the following description of embodiment examples with reference to the associated drawing. Therein depict:
- Fig. 1A:: a detail view of a device for heat transfer with an assembly of tube elements with interspaced fins, a tube plate as well as a sealing element and a collector as individual components in exploded view,
- Fig. 1B:: the assembly of the tube elements with tube plates and sealing elements in a mounted state as well as an individual components,
- Fig. 2A:: a tube element, which is not part of the present invention, developed as a flat tube with a B-shaped cross section with two shanks, formed into a web, with a connection region in perspective view,
- Fig. 2B and 2C:: connection region of the tube element from Fig. 2A with a weld seam,
- Fig. 3A and 3B:: tube element from Fig. 2A, partially flared at the tube end, in perspective view as well as top view,
- Fig. 4A to 4D:: tube element from Fig. 2A flared at the tube end, in perspective view as well as top view,
- Fig. 5A:: a tube element, which is not part of the present invention, developed as a multi-channel flat tube with webs, in perspective view,
- Fig. 5B to 5D:: the tube element from Fig. 5A with a stamping element for flaring the tube end in a representation during the flaring in perspective view as well as in a sectional representation and in the flared final state of the tube element,
- Fig. 5E:: the tube element from Fig. 5A flared at the tube end in perspective view,
- Fig. 6A to 6D:: each showing a tube element developed as a flat tube with grooves on both sides and extending in the longitudinal direction, with a connection region in perspective view as well as in a sectional representation,
- Fig. 7A and 7B:: a detail view of a device for heat transfer with an assembly of tube elements according to Fig. 2A to 4D, a tube plate as well as a sealing element in a mounted state as well as an individual components,
- Fig. 8A to 8C:: a detail view of a device for heat transfer with an assembly of tube elements according to Fig. 5A to 5E, a tube plate as well as a sealing element, in a mounted state as well as an individual components,
- Fig. 9A to 9E:: a retaining frame as solder tool for joining an assembly of tube elements with interspaced fins with detail views of a tube-fixing element on plug-in elements developed thereon, in each instance in perspective view,
- Fig. 10A to 10E:: a detail view of a device for heat transfer with an assembly of tube elements, a tube plate as well as a sealing element and means for flaring the tube ends for mounting the tube plates on the assembly of tube elements, in a mounted state as well as an individual components,
- Fig. 11A to 11F:: depictions of flaring the tube ends with the means according to Fig. 10B to 10E as well as for mounting the tube plates on the assembly of tube elements.

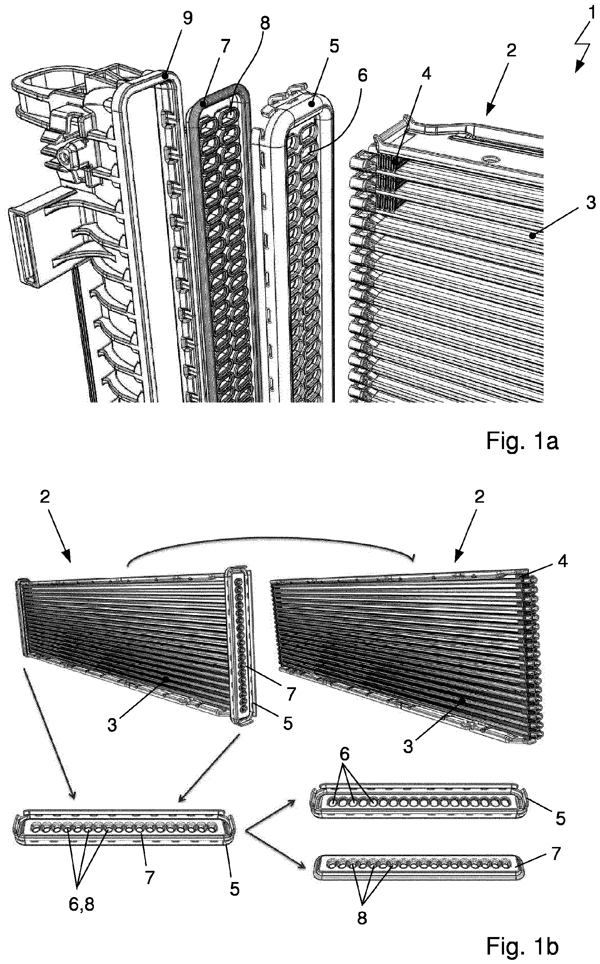

**Fig. 1A and 1B** show an assembly 2 of tube elements 3, in particular of flat tubes, with tube plates 5 and sealing elements 7 of a device for heat transfer. In Fig. 1A a detail view of the device 1 for heat transfer is shown with the assembly 2 of the tube elements with interspaced fins 4, with a tube plate 5 as well as the sealing element 7 and a collector 9 as individual components in an exploded representation. When using a coolant as a fluid, the collector 9 is also termed coolant collector. In Fig. 1B the assembly 2 of the tube elements 3 with the tube plates 5 and the sealing elements 7 is depicted in a mounted state as well as an individual components.

Depending on the power requirement, the assembly 2 built of the flat tubes 3 is implemented as a single row or multi-row assembly and is scalable in size, which means in particular in length or in width. The tube elements 3 shown in Fig. 1A are disposed in two rows, while Fig. 1B shows a single-row assembly 2 of the tube elements 3.

The tube elements 3 aligned next to and parallel to one another, are disposed within one row with their broad sides toward one another such that between directly adjacent tube elements 3 in each instance one flow path for a fluid, in particular air, is formed. The flow path extends herein in each instance between the tube elements 3. The tube elements 3 of one row are dispoflushsed with one another and extend in each instance between two collectors 9. The internal volumes of the tube elements 3 are connected with the internal volumes of the collectors 9.

In the flow paths, and thus in interspaces of adjacently disposed tube elements 3, elements are disposed for changing the flow cross section and/or for enlarging the area for heat transfer. Fins 4 are developed as elements for changing the flow cross section and/or for enlarging the area for heat transfer. Alternatively, ribs could also be applied. Like the tube elements 3, the fins 4 are preferably implemented of a material that is a very good heat conductor, such as an aluminum alloy.

In the assembled state at the end faces or at the narrow sides of the assembly 2 tube plates 5 are provided that in each instance can also serve as a side wall element of a collector 9. As end faces are herein denoted the sides toward which the ends of the tube elements 3 are oriented. The tube plates 5 are each developed in the form of a substantially rectangular metal sheet, in particular of an aluminum alloy, as a deep drawn part, stamped part or hydroformed part. As the metal sheet is herein understood a flat rolling mill finished product of metal. By hydroforming, also termed high-pressure metal forming, is understood the forming of the sheet in a closed forming mold by means of pressure, which is generated for example through a water-oil emulsion in the mold.

The tube plates 5, rounded off in the proximity of the corner, as well as also the sealing elements 7 comprise passage apertures 6, 8 for receiving the tube elements 3. The passage apertures 6 of the tube plates and the passage apertures 8 of the sealing elements correspond to one another and to the outer dimensions of the tube elements 3 in order to establish a fluidically impermeable connection between the individual tube elements 3 and the tube plates 5.

The tube plates 5 disposed on the sides facing each other of the collectors 9 are fixedly connected with the tube elements 3. Due to the sealing element 7, the fixed connection is in each instance to be viewed as technically impermeable, zero-leakage connection. The tube plates 5 are disposed on the assembly 2 at the narrow sides of the tube elements 3 oriented perpendicularly to the tube elements 3.

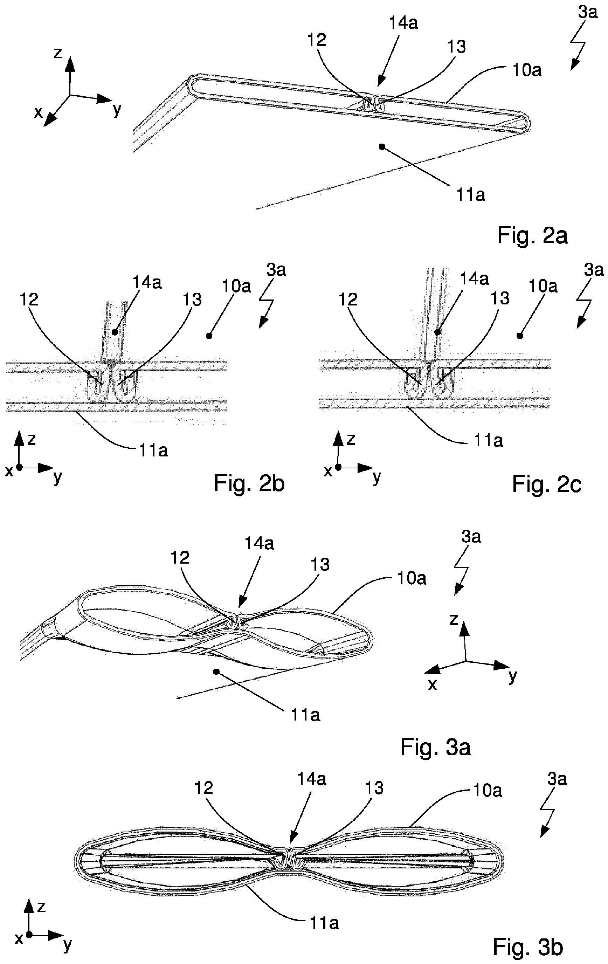

**Fig. 2A to 2C****,** which do not form part of the present invention, show each a tube element 3a developed as a flat tube with a B-shaped cross section with two shanks 12, 13 formed into a web, with a connection region 14a, each in perspective view. The connection region 14a as a region of conjuncture of the shanks 12, 13 extends from a first end to a second end along a longitudinal direction x on an upper side 10a of the tube element 3a. A lower side 11a of tube element 3a is fully developed planarly.

The flow cross section of the tube element 3a is oriented in a plane spanned by a direction of breadth ***y*** and a direction of height ***z*.** The tube element 3a according to Fig. 2A has, for example, at a wall thickness of 0.22 mm a breadth of 25.2 mm and a height of approximately 1.5 mm. The tube elements 3a can herein be developed with breadths of up to 40 mm.

The connection region 14a of the first shank 12 with the second shank 13 on the upper side 10a of the tube element 3a developed with the B-shaped cross section comprises a small gap substantially circular in shape with a diameter of approximately 0.18 mm. Using exclusively compressed sealing elements 7, the gap extending over the entire length of the tube element 3a is extremely difficult to seal against the tube plate 5. In the proximity of the gap sufficient compression of the sealing element 7 cannot be ensured and the probability of leaks is consequently high.

To seal the tube element 3a against the tube plate 5, the upper side 10a of the tube element 3a, at least in the proximity of the connection with the tube plate 5, is planar. After the forming of the tube element 3a by milling and folding by means of a tube fabrication machine, the connection region 14a is worked by means of welding, in particular laser welding. In this process the gap is closed. For the subsequent soldering of the assembly 2 in a CAB process, the material of the face layer or of the coating layer and the base material or the core material are mixed with one another on the welded surface along the connection region 14a. The surface of the weld seam is resistant to the CAB process and does not dissolve during the CAB process.

The laser welding can be carried out on site only in the region of the ends of the tube elements 3a, and thus in regions of the contact on the tube plate 5, at which the tube element 3a is sealed with the sealing element 7 against the tube plate 5 or is soldered to the tube plate 5. It can also be carried out continuously along the entire length of the tube.

The tube element 3a welded in this manner has, in particular in the proximity of the weld seam, a surface with smooth transition radii and is developed as planarly as possible. In Fig. 2B and 2C is shown a connection region 14a of tube element 3a from Fig. 2A with a weld seam. In the development of the connection region 14a according to Fig. 2B the seam line of the weld seam exceeds the tube surface according to Fig. 2C by maximally 0.075 mm, while the seam line of the weld seam falls below the tube surface in the development of the connection region 14a according to Fig. 2C by maximally, -0.075 mm. The smooth-surfaced tube surface with the aid of the weld seam enables sufficient compression of the sealing element 7 and therewith the sealing of the tube elements 3a against the tube plates 5.

Shanks 12, 13 in the middle of the B-shaped cross section of the tube elements 3a serve in each instance as a rib, or as a web, to facilitate the sealing pressure that has to be applied for the sealing against the tube plate 5. The B-seam rib support enables the use of tube elements with a maximal total breadth in the range of 20 mm to 25 mm and therewith greater widths than is the case in known flat tubes of prior art.

**Fig. 3A and 3B** show in perspective view as well as in top view a tube element 3a from Fig. 2A that is at least partially flared at the tube end. After the welding of the connection region 14a of the tube element 3a developed as a flat tube with a B-shaped cross section, and therewith after the planing of the surface of the upper side 10a, the tube element 3a is in each instance flared in the proximity of the tube end leading to deformation such that the two flow channels, delimited by the two shanks 12, 13 and the wall of the tube element 3a, are changed from a substantially rectangular cross sectional form into an oval cross sectional form. Only in the connection region 14a does the cross section remain nearly unchanged. The oval cross sectional form of the flow channels on both sides of shanks 12, 13 are highly resistant against external pressure, in particular against pressure applied by the compressed sealing element 7.

The at least partially flared tube element 3a has now, for example at a total breadth of approximately 24.3 mm, in the region of maximal flaring a height of approximately 3.7 mm.

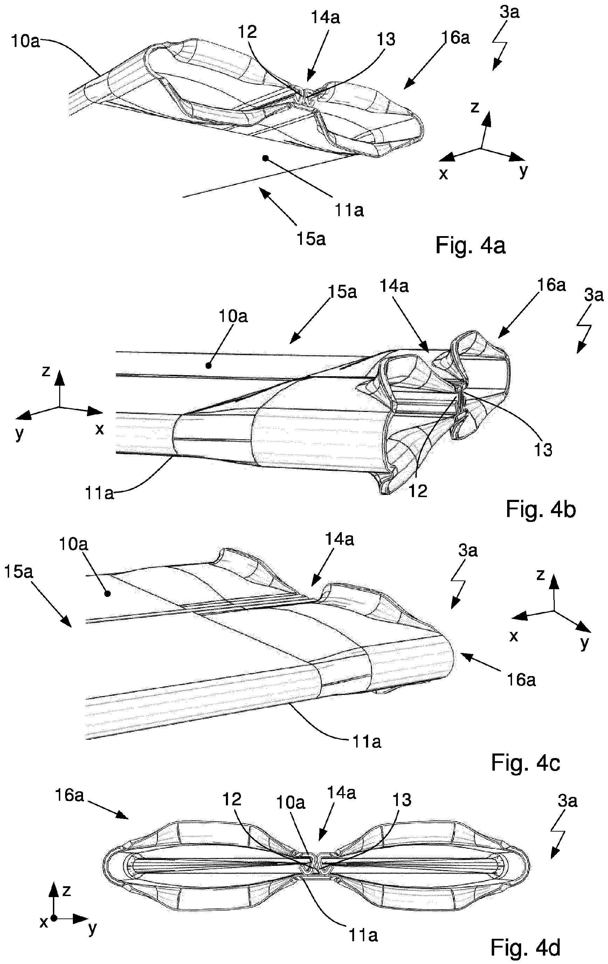

**Fig. 4A to 4D** show at the tube end a final flaring state of tube element 3a from Fig. 2A in perspective view as well as in top view. After the at least partial flaring of tube element 3a according to Fig. 3A and 3B, the tube element 3a is brought to its final flaring in each instance in the already previously deformed regions of the tube ends. Herein, in particular the margins of the upper side 10a and the lower side 11a are deformed in the direction of height ***z*** leading to a flared cross section. Tube element 3a comprises herein a first, nondeformed region 15a as a region of heat transfer in which there is fluid flow about the tube element 3a and a second, deformed region 16a as a region of deformation as well as connection with the tube plate 5.

The deformed wall of tube element 3a at the tube ends is developed continuously and without fractures. The form of deformation increases, for one, the structural tube wall thickness and strength and, for another, serves for reinforcement and sealing within the passage apertures 6 in the tube plates 5.

The tube element 3a in a state of final flaring has now, for example at a total breadth of approximately 24.4 mm, in the region of maximal flaring a height of approximately 5.6 mm. The height in the nearly unchanged connection region 14a is approximately 1.5 mm.

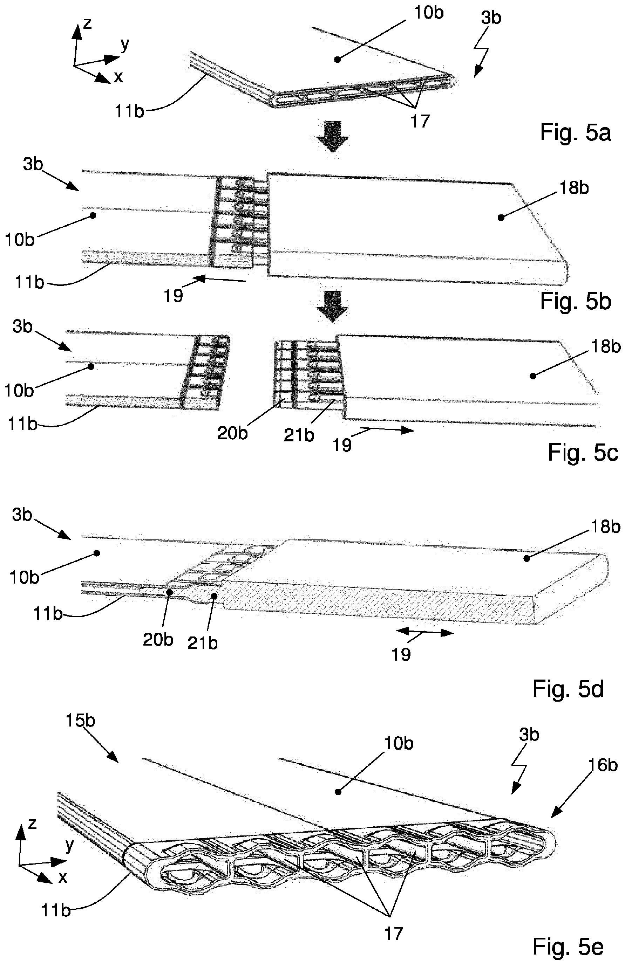

**Fig. 5A** shows in perspective view a tube element 3b, which does not belong to the present invention, developed as a multi-channel flat tube with webs 17. The tube element 3b developed as an extruded tube represents, in addition to the tube element 3a according to Fig. 2A to 4D developed as a flat tube with a B-shaped cross section, an alternative implementation for a single-row assembly 2 of a device 1 for heat transfer with a planar upper side 10b and a planar lower side 11b. The internal webs 17, oriented in the direction of height z and supporting the tube wall against external pressure, of the extruded tube element 3b serve as ribs in particular to countenance the sealing pressure to be applied for the sealing against the tube plate 5. The webs 17 absorbing the counter forces of a compressed sealing element 7 divide the flow cross section of the tube element 3b into chambers. The tube element 3b according to Fig. 5A has, for example at a wall thickness of 0.22 mm, a breadth of 25.9 mm and a height of approximately 2.1 mm.

Flaring of the tube wall or of the flow cross sections of the flow channels or chambers at the tube ends, in particular in the direction of height ***z*,** is exclusively possible in the regions between the webs 17.

In **Fig. 5B to 5D** is depicted the tube element 3b from Fig. 5A with a stamping element 18b for flaring the tube ends in a depiction during the process of flaring in perspective view as well as in a sectional representation and in the flared end state of the tube element 3b.

The stamping element 18b developed with guide elements 20b and flaring elements 21b is disposed during the process of flaring the tube wall or of the flow cross sections of the flow channels at the end faces of tube element 3b such that the guide elements 20b and flaring elements 21b, oriented in each instance in a common direction, are oriented in the longitudinal direction ***x*** of tube element 3b. To each flow channel is herein assigned a guide element 20b with a flaring element 21b.

When moving the stamping element 18b in the direction of motion 19, which extends in the longitudinal direction ***x*** according to Fig. 5B, into each flow channel a guide element 20b is introduced such that the stamping element 18b is centered within the tube element 3b, in particular within the flow channel. With the continuous movement in the direction of motion 19 the flaring elements 21b reach the wall of tube element 3b at the end face. Since the stamping element 18b in the proximity of the flaring elements 21b has greater dimensions, especially in the direction of height ***z*,** than in each instance the cross section of the flow channels, the cross section of the flow channels are flared during the penetration of the flaring elements 21b into the flow channels. The wall of tube element 3b is deformed in the region of the flow channels leading to an expansion of the flow channels in the direction of height ***z*** and the flaring of the flow channels. At the conclusion of the process of flaring, the stamping element 18b is retracted from the tube element 3b in the direction of motion 19 according to Fig. 5C.

The tube element 3b is now developed with a first, nondeformed region 15b as the region of heat transfer in which a fluid flows about the tube element 3b and a second, deformed region 16b as a region of deformation as well as connection with the tube plate 5.

In the end state of having been flared the tube element 3b now has in the region of maximal flaring a height of approximately 3.0 mm for example. The height in the nearly unchanged connection region is approximately 2.1 mm.

In particular due to the development of the internal rib structures, the tube elements 3a, 3b enable the single-row assembly 2 of a device 1 with a deeper heat transfer core, which can conventionally only be achieved with a multi-row heat transfer core. With a single-row assembly 2 of tube elements 3a, 3b, the devices 1 can herein have a breadth of more than 11 mm.

The device 1 developed with the tube elements 3a, 3b has furthermore a very high thermal shock resistance due to the flexible, non-rigid connection of tube element-sealing element-tube plate, which is developed on at least one side of the assembly 2.

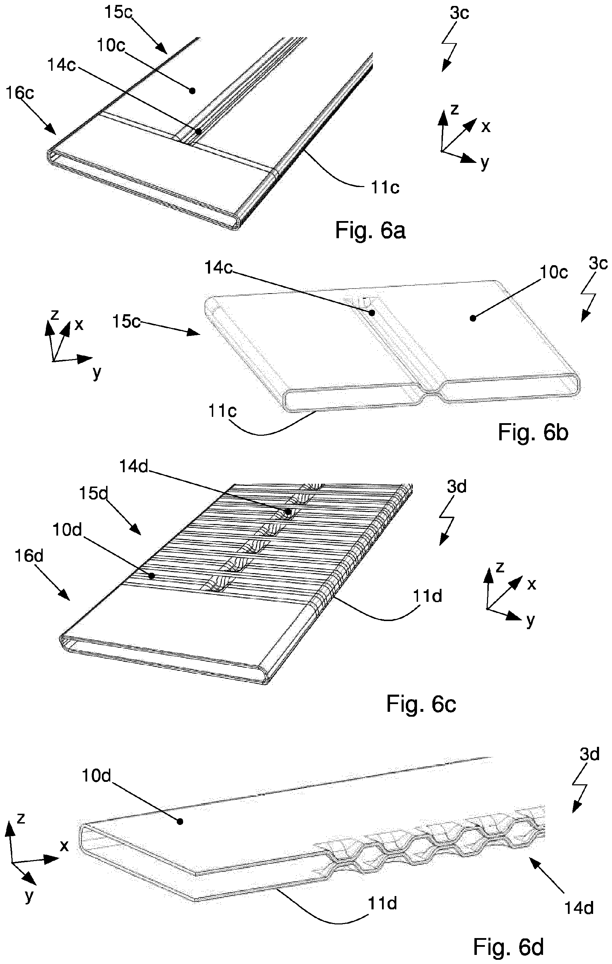

In **Fig. 6A to 6D** are shown in perspective view as well as in a sectional representation a tube element 3c, 3d developed as a flat tube with grooves extending in the longitudinal direction ***x*** and disposed on both sides, that is on the upper side 10c, 10d as well as on the lower side 11c, 11d, with a connection region 14c, 14d.

The internal structures required to meet the high internal pressure pulse requirements are each enabled by a welding connection within the tube elements 3c, 3d developed in the connection regions 14c, 14d. The central structure elements in particular for the vertical rigidity in the direction of height ***z*** of the tube element 3c, 3d under internal pressure, are each depicted by a groove or notch points having a welded connection on the surface of the tube elements 3c, 3d. The groove can herein be developed within a first region 15c, 15d as a region of heat transfer according to Fig. 6A and 6B continuously or, according to Fig. 6C and 6D, which do not depict the invention, discontinuously, in particular as a fluted spot weld pattern.

The grooves terminate at a predetermined distance from the tube ends in order to provide in a second region 16c, 16d of the tube ends, as a region of deformation, a planar upper side 10c, 10d as well as a planar lower side 11c, 11d for the connection of the tube elements 3c, 3d, guided through the passage apertures 6 in the tube plates 5, with the tube plates 5. The internal welded connection of the tube element 3c, 3d extends between the regions of the tube ends in order to enable a mechanical mounting of the tube element 3c, 3d on the tube plate 5.

The tube elements can furthermore be developed with a multiplicity of grooves, which means with a number greater than one, and/or with a fluted spot weld pattern.

The tube elements 3c, 3d, developed as welded flat tubes, can be developed with a greater dimension in the direction of breadth y than conventional tube elements and this also in order to satisfy higher demands made of the heat transfer. The internal cleanness is, moreover, greater than in flat tubes with a B-shaped cross section, that means compared to folded and soldered tube elements since no fluxing agent is required in the welding process.

In motor vehicle heat exchangers of prior art with a dimension in the direction of breadth ***y*** of at least 20 mm most frequently flat hard-soldered aluminum tubes are utilized. Inner soldering of folded tube elements, however, requires an internal flux. Residues of the fluxing agent are, in turn, a main source of contamination of the coolant circuit. For example, when applied in fuel cell systems, a welded tube element is exclusively used which has passed through a special cleaning process.

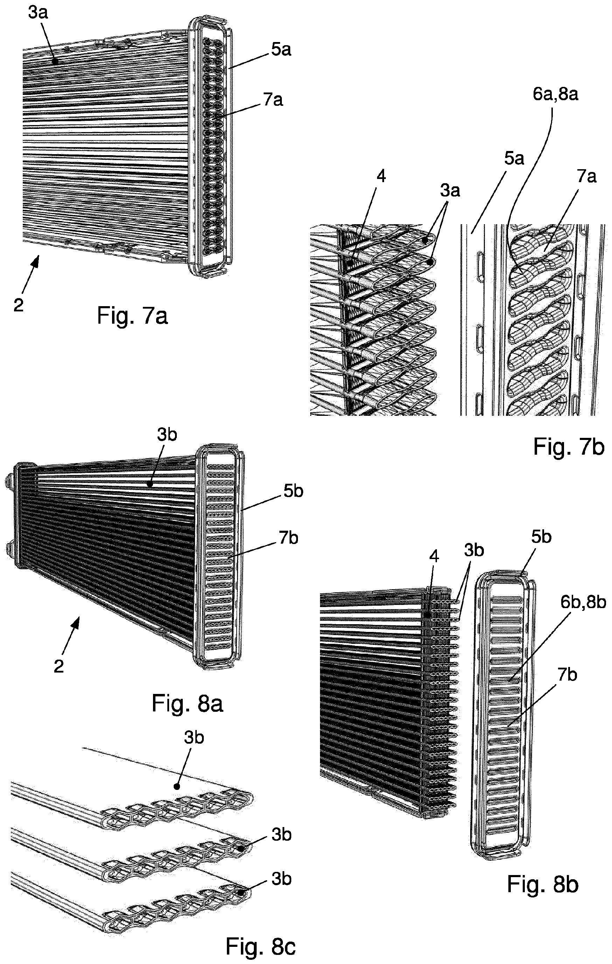

In **Fig. 7A and 7B** as well as in **Fig. 8A to 8C** detail views are depicted in an assembled state as well as an individual components of a device 1 for heat transfer with an assembly 2 of tube elements 3a according to Fig. 2A to 4D, with a tube plate 5a as well as a sealing element 7a or of tube elements 3b according to Fig. 5A to 5E, with a tube plate 5b as well as a sealing element 7b.

Fig. 7A shows in particular an assembly 2 of tube elements 3a, developed of welded and deformed flared flat tubes with B-shaped cross sections, which are disposed having been guided through the passage apertures 6a, 8a placed in the tube plate 5a and the sealing element 7a. As a consequence of the flaring of the tube elements 3a, the tube elements 3a with the sealing elements 7a, disposed between the tube elements 3a and the margins of the passage apertures 6a of the tube elements 3a, are fixedly and fluidically impermeably connected with the tube plate 5a.

In Fig. 8A is disclosed in particular an assembly 2 of tube elements 3b developed of deformingly flared multi-channel flat tubes, which have been passed through the passage apertures 6b, 8b placed in the tube plate 5b and the sealing element 7b.

Due to the flaring of the tube elements 3b, the tube elements 3b are fixedly and fluidically impermeably connected with the tube plate 5b with the sealing elements 7b disposed between the tube elements 3b and the margins of the passage apertures 6b of the tube plate 5b.

The assemblies 2 furthermore comprise fins 4 developed between the tube elements 3a, 3b.

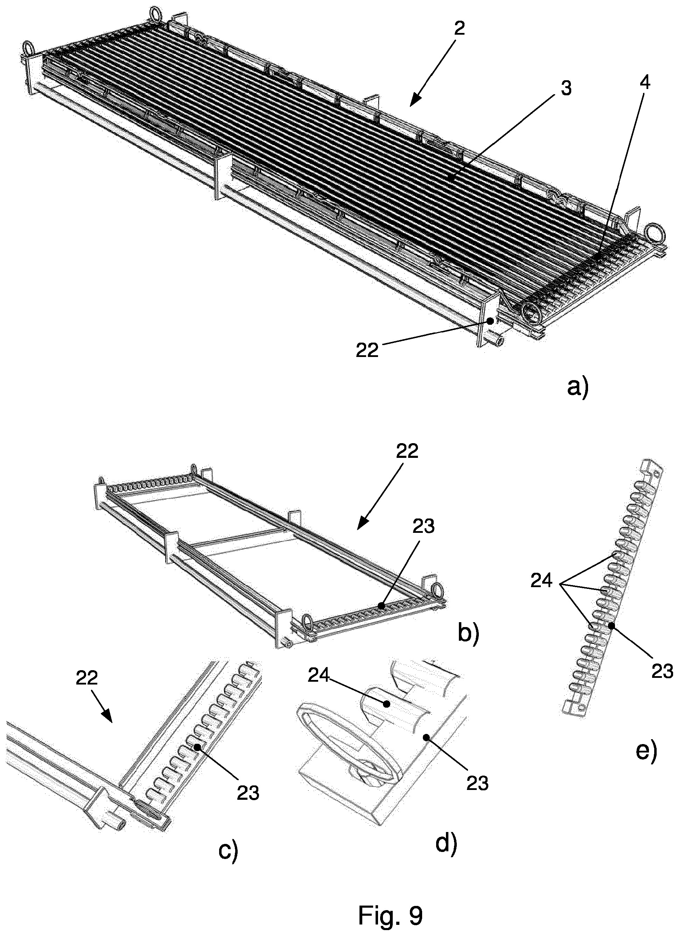

In **Fig. 9A to 9E** are depicted a retaining frame 22 as a solder tool for joining an assembly of tube elements 3 with interspaced fins 4 with detail views of a tube-fixing element 23 on plug-in elements 24 developed thereon, in each instance in perspective view.

Tube elements 3 with the interspaced fins are fixed within the retaining frame 22 such that the assembly in its entirety can be soldered together, for example in a solder furnace, and the individual components can be interconnected. The tube elements 3 having the same length in each instance are disposed in a single row and flush at the end faces.

The tube elements 3 are retained at the end faces by means of a tube-fixing element 23. The tube elements 3 are herein placed with the open cross sections onto plug-in elements 24 developed on the tube-fixing element 23. This is done to avoid movements of the tube elements 3 particularly transversely to the longitudinal direction. The tube-fixing elements 23 are disposed on the retaining frame 22 movably in the longitudinal direction for the purpose of compensating changes of length due to thermal expansion. The tube-fixing elements 23 are for example fixed across bolt connection with an elongated hole on the retaining frame 22.

Following the process of soldering, the assembly of tube elements 3 and fins 4 can be removed from the retaining frame 22 as a soldered core of a device for heat transfer without tube plate or collectors.

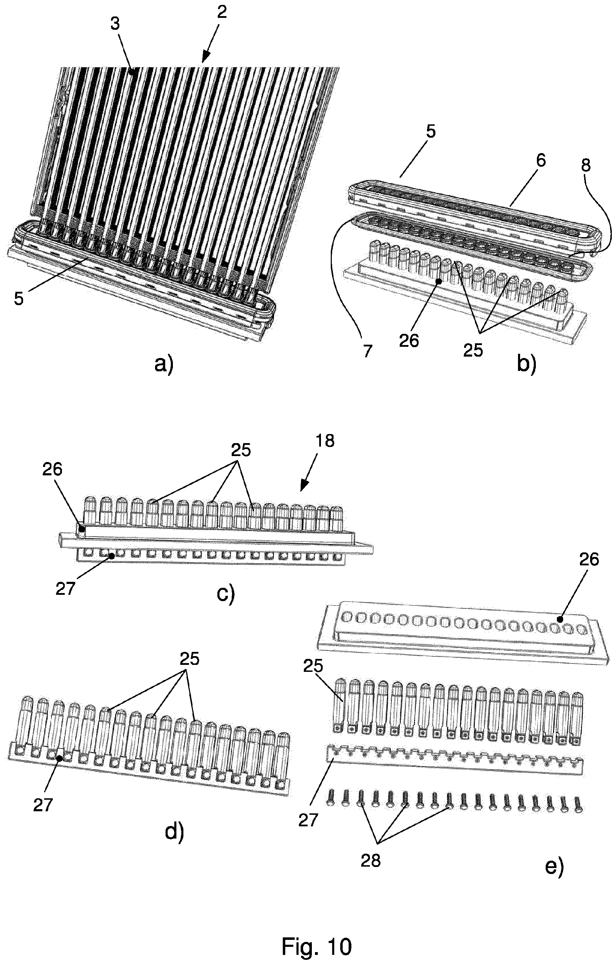

In **Fig. 10A to 10E** are, in addition to a detail view of a device for heat transfer, the assembly 2 of tube elements 3 is shown in an assembled state as well as an individual components with an assembly 2 of tube elements 3 with a tube plate 5 as well as a sealing element 7 and means for flaring the ends of the tube elements 3 for mounting the tube plates 5 on the assembly of tube elements 3 in a mounted state as well as an individual components.

In Fig. 10B is depicted an assembly of means for flaring the ends of the tube elements 3 with respect to the tube plate 5 and the sealing element 7. Herein the development is evident of pin elements 25 for penetrating with a first end into the end faces of the tube elements 3, which are projecting through the passage apertures 6, 8 of the tube plate 5 and of the sealing element 7. The pin elements 25 are spaced apart from one another and oriented to correspond with the passage apertures 6, 8 and fixed through a base element 26. This is also shown in Fig. 10C. The pin elements 25 retained by means of the base element 26 are, according to Fig. 10D, coupled with one another at second ends, developed distally to the first ends, across a connection element 27.

It is especially clear in the exploded representation according to Fig. 10E that the pin elements 25 are connected with the connection element 27 across securement elements 28, which can be developed for example as rivets, bolts or screws.

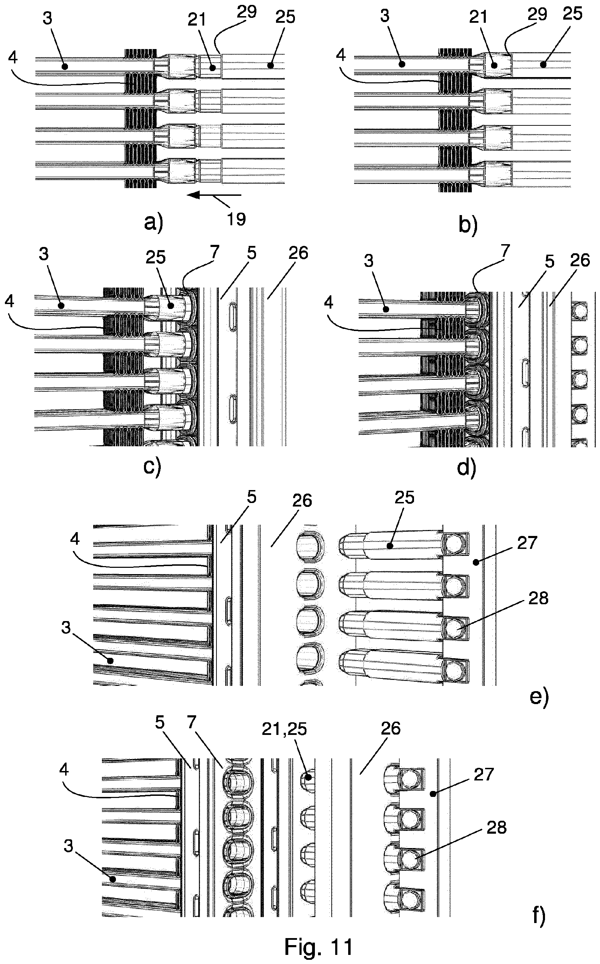

In **Fig. 11A to 11F** are shown depictions regarding the method of flaring the ends of tube elements 3 with the means according to Fig. 10B to 10E as well as regarding the process of mounting the tube plates 5 on the assembly of tube elements 3 with the fins 4.

After welding the tube elements 3a, developed as flat tubes with a B-shaped cross section, or after soldering the tube elements 3c, 3d, developed with grooves, or after soldering the tube elements 3, listed here to encompass collectively the tube elements 3a, 3c, 3d and the tube elements 3b developed as extruded multi-channel flat tubes, assemblies of tube elements 3 with fins are obtained as a joined unit. The heat transfer core is mounted by soldering. The tube elements 3 are not deformed at the ends.

At the start of flaring the ends of the tube elements 3, the sealing element 7 and the tube plate 5, also according to Fig. 10B, are disposed on the means for flaring. The pin elements 25 project herein through the passage apertures 6, 8 of the sealing element 7 and of the tube plate 5.

According to Fig. 11A the pin elements 25 are subsequently disposed with the first, free ends on the end faces of the tube elements 3, which means on the ends to be flared of the tube elements 3. In Fig. 11A a state, however, is shown in which the pin elements 25 have already been removed again from the tube elements 3 opposite to the direction of motion 19. Each pin element 25 comprises a front edge developed for catching the tube element 3 when the soldered heat transfer core approaches. A similar depiction for the tube elements 3b developed as multi-channel flat tubes is evident in Fig. 5B, wherein each flaring element 21 comprises a guide element 20b at the free end.

Every pin element 25 is developed with a limit stop 29 which delimits the flaring element 21 and marks the end of the insertion of the pin elements 25 in the direction of motion 19 into the tube element 3. The limit stop 29 developed as a step herein abuts on the end face of the now flared and deformed tube element 3, which is especially clearly shown in Fig. 11B.

Fig. 11C shows the disposition of the pin elements 25, guided through the passage apertures 6, 8 of the tube plate 5 and of the sealing element 7, in connection with the end faces of the tube elements 3. For a better representation the tube plate 5 and the sealing element 7 are displaced out of the end position about the flared tube elements 3. In comparison, Fig. 11D shows the end position of the means for flaring the ends of the tube elements 3. In the proximity of the flared and deformed tube elements 3, the sealing element 7 is disposed between the tube elements 3, fully encompassing the tube elements 3 over their circumference, and the tube plate 5.

The method for flaring the ends of the tube elements 3, and therewith the production of a flexible and fluidically impermeable connection between the tube elements 3 and the tube plate 5, is completed by removing the pin elements 25 from the tube elements 3 according to Fig. 11E and by the removal of the base element 26 according to Fig. 11F.

The method for connecting the tube elements 3 with the tube plate 5 ensures that the tube elements 3 are disposed in precise positions of the passage apertures 6, 8 and in this manner a certain and secure fluidically impermeable connection is obtained. To ensure sufficient, certain and reliable compression of the sealing element 7, a specific magnitude of flaring is preset as an end expansion of the tube elements 3. The compression of the sealing element 7 is therein in the range of 10% to 50% compression, wherein the major portion of compression is attained directly after mounting the tube plate 5 with the sealing element 7 on the tube elements 3. the tube elements 3 are, for example, flared in the direction of height ***z*** by up to +0.2 mm as well as in the direction of breadth **y,** and thus in broadness, by up to +0.1 mm.

With the flaring of the ends of tube elements 3 a further structural augmentation of the tube wall is provided. Herein the tube wall is shaped continuously without experiencing fractures.

### List of Reference Symbols

- 1: Device
- 2: Assembly
- 3: Tube element, flat tube
- 3a: Tube element, B-tube
- 3b: Tube element, extruded tube
- 3c, 3d: Tube element
- 4: Fins
- 5, 5a, 5b: Tube plate
- 6, 6a, 6b: Passage apertures, tube plate
- 7, 7a, 7b: Sealing element
- 8, 8a, 8b: Passage apertures, sealing element
- 9: Collector
- 10a, 10b, 10c, 10d: Upper side
- 11a. 11b, 11c, 11d: Lower side
- 12: First shank
- 13: Second shank
- 14a, 14c, 14d: Connection region
- 15a, 15b, 15c, 15d: First region
- 16a, 16b, 16c, 16d: Second region
- 17: Web
- 18b: Stamping element
- 19: Direction of motion, stamping element
- 20b: Guide element
- 21, 21b: Flaring element
- 22: Retaining frame
- 23: Tube-fixing element
- 24: Plug-in element
- 25: Pin element
- 26: Base element
- 27: Connection element
- 28: Securement element
- 29: Limit stop

- ***x***: Direction, longitudinal direction
- ***y***: Direction, direction of breadth
- ***z***: Direction, direction of height

## Claims

1. Device (1) for heat transfer between a first fluid and a second fluid, comprising an assembly (2) of
- tube elements (3, 3c, 3d) for the conduction of the first fluid, which in each instance are developed with a first, nondeformed region (15c, 15d) and at least one second, deformed region (16c, 16d), disposed at an end of the tube element (3, 3c, 3d),
- at least one tube plate (5) with passage apertures (6) as well as at least one sealing element (7) with passage apertures (8), wherein the sealing element (7) is in each instance disposed between an outer surface of the second region (16c, 16d) of a tube element (3, 3c, 3d) and an edge of a rim of the passage opening (6) of the tube plate (5),
wherein the tube elements (3, 3c, 3d) as flat tubes
- are developed with flow channels for the conduction of the first fluid, wherein the flow channels are separated from one another by at least one internal structure element, and are as well
- developed of a metal and the cross section of the tube elements (3, 3c, 3d) are flared in the second region (16c, 16d) in a plane oriented perpendicularly to a longitudinal direction (x) of each tube element,
**characterised in that** the tube elements (3c) comprise at least one groove extending in the longitudinal direction (x) on an upper side (10c) as well as on a lower side (11c), and that the internal structure element is developed by at least one welded connection in a connection region (14c, 14d), and
wherein the connection region (14c, 14d) is developed so as to terminate at a predetermined distance from the at least one end of the tube element (3c, 3d) such that the second region (16c, 16d) has a planar upper side (10c, 10d) as well as a planar lower side (11c, 11d).

2. Device (1) as in claim 1, **characterized in that** the welded connection of the tube element (3c) is developed such that it extends continuously.

3. Device (1) as in claim 1, **characterized in that** the welded connections of the tube element (3d) are developed as a fluted spot weld pattern.

4. Device (1) as in one of claims 1 to 3, **characterized in that** the tube plate (5, 5a) is developed as a side wall element of a collector (9) of the device (1).

5. Device (1) as in claim 4, **characterized in that** two tube plates (5, 5a) are developed with passage apertures (6, 6a) as well as two sealing elements (7, 7a) with passage apertures (8, 8a), wherein the tube plates (5, 5a) are in each instance connected fluidically impermeably with the tube elements (3, 3a) and the passage apertures (6, 6a) are each developed so as to correspond in form with an outer form of the tube elements (3, 3a) and each tube element (3, 3a) is disposed having been guided with a first end through a passage aperture (6, 6a) developed in a first tube plate (5, 5a) and with a second end through a passage aperture (6, 6a) developed in a second tube plate (5, 5a).

6. Device (1) as in one of claims 1 to 5, **characterized in that** the assembly (2) developed of the tube elements (3, 3a) is developed as a single-row or multi-row assembly.

7. Device (1) as in one of claims 1 to 6, **characterized in that** the tube elements (3, 3a) are developed of an aluminum alloy.

8. Device (1) as in claim 6 or 7, **characterized in that** the tube elements (3, 3a) are oriented in a row next to each other and in parallel as well as with their broad sides toward one another, such that between directly adjacently disposed tube elements (3, 3a) in each instance a flow path for the second fluid is developed.

9. Device (1) as in claim 8, **characterized in that** in the flow paths of adjacently disposed tube elements (3, 3a) fins (4) or ribs are disposed for changing the flow cross section and/or for enlarging the area for the heat transfer.

10. Device (1) as in claim 9, **characterized in that** the fins (4) or ribs are developed of an aluminum alloy.

11. Use of a device (1) for heat transfer as in one of claims 1 to 10 as a coolant-air heat exchanger as in one of claims 1 to 20 in a coolant circuit, in particular in an engine coolant circuit of a motor vehicle.

12. System for the manufacture of a device (1) for heat transfer as in one of claims 1 to 10, comprising solder tools for joining an assembly of tube elements (3, 3a, 3b, 3c, 3d) with interspaced fins (4) as well as means for flaring ends of the tube elements (3, 3a, 3b, 3c, 3d) for connecting the tube elements (3, 3a, 3b, 3c, 3d) with a tube plate (5, 5a, 5b), wherein
- the solder tools are developed with a retaining frame (22) with at least one tube-fixing element (23) for retaining the tube elements (3, 3a, 3b, 3c, 3d) on an end face as well as on plug-in elements (24) developed on the tube-fixing element (23), wherein the tube elements (3, 3a, 3b, 3c, 3d) with the open cross section of the end face are pluggable onto the plug-in elements (24),
- the means for flaring the ends of the tube elements (3, 3a, 3b, 3c, 3d) are developed of a stamping element (18b) with guide elements (20b) and flaring elements (21b) or with pin elements (25) for penetrating with a first end the open cross sections of the end faces of the tube elements (3, 3a, 3b, 3c, 3d),
- wherein the guide elements (20b) in connection with the flaring elements (21b) or the pin elements (25) are oriented correspondingly to the disposition of the tube elements (3, 3a, 3b, 3c, 3d) spaced apart from one another and the pin elements (25) are fixed by a base element (26) and coupled with one another across a connection element (27) at second ends developed distally to the first ends.

13. System as in claim 12, **characterized in that** the tube fixing elements (23) are disposed movably in a longitudinal direction (x) of the tube elements (3, 3a, 3b, 3c, 3d) on the retaining frame (22).

14. System as in claim 13, **characterized in that** the tube-fixing elements (23) are fixedly disposed on the retaining frame (22) in each instance across bolt connections developed with an elongated hole.

15. System as in one of claims 12 to 14, **characterized in that** the pin elements (25) are connected with the connection element (27) across securement elements (28).

16. System as in claim 15, **characterized in that** the securement elements (28) are developed as rivets or bolts or screws.

17. Method for the manufacture of a device (1) for heat transfer as in one of claims 1 to 10, comprising the following steps:
- forming tube elements (3a), each with a connection region (14a) with a gap on an upper side (10a), by milling and folding as well as closing the gap as well as planing the surface of the upper side (10a) by means of welding, in particular laser welding, or forming a tube element (3c, 3d) with grooves and welding within the grooves,
- connecting a multiplicity of tube elements (3, 3a, 3b, 3c, 3d) into an assembly by soldering,
- aligning the assembly of tube elements (3, 3a, 3b, 3c, 3d), of sealing element (7, 7a, 7b) and a tube plate (5, 5a, 5b) with respect to the means for flanging the ends of the tube elements (3, 3a, 3b, 3c, 3d), wherein
- the sealing element (7, 7a, 7b) is in contact on the tube plate (5, 5a, 5b) and passage apertures (6, 6a, 6b, 8, 8a, 8b) of the sealing element (7, 7a, 7b) and of the tube plate (5, 5a, 5b) correspond to one another,
- the tube elements (3, 3a, 3b, 3c, 3d) project with second formable regions (16a, 16b, 16c, 16d) through the passage apertures (6, 6a, 6b, 8, 8a, 8b) and
- guide elements (20b) of a stamping element (18b) or pin elements (25) with first ends are disposed in the direction of open end faces of the second, formable regions (16a, 16b, 16c, 16d) of the tube elements (3, 3a, 3b, 3c, 3d), wherein the guide elements (20b) oriented in each instance in one direction and flaring elements (21b) or the pin elements (25) are oriented in a longitudinal direction (x) of the tube elements (3, 3a, 3b, 3c, 3d) and to each flow channel a guide element (20b) with a flaring element (21b) or a pin element (25) is assigned,
- moving the stamping element (18b) or the pin elements (25) in a direction of motion (19), wherein in each flow channel a guide element (20b) or a pin element (25) is inserted and the stamping element (18b) or the pin element (25) is in each instance centered within the flow channel, as well as the flaring elements (21b) or the pin elements (25) flare the cross sections of the flow channels of the tube elements (3, 3a, 3b, 3c, 3d), wherein the wall of the tube element (3, 3a, 3b, 3c, 3d) is in each instance pressed against the rim of a passage aperture (6, 6a, 6b) of the tube plate (5, 5a, 5b) and the sealing element (7, 7a, 7b) is disposed between the wall of the tube element (3, 3a, 3b, 3c, 3d) and the margin of the passage aperture (6, 6a, 6b) of the tube plate (5, 5a, 5b), as well as
- removing the stamping element (18b) or the pin elements (25) from the tube elements (3, 3a, 3b, 3c, 3d).

## Patentansprüche

1. Eine Vorrichtung (1) zur Wärmeübertragung zwischen einem ersten Fluid und einem zweiten Fluid, mit einer Anordnung (2) von
- Rohrelementen (3, 3c, 3d) für die Leitung des ersten Fluids, die jeweils mit einem ersten, unverformten Bereich (15c, 15d) und mindestens einem zweiten, verformten Bereich (16c, 16d) ausgebildet sind, angeordnet an einem Ende des Rohrelements (3, 3c, 3d),
- mindestens eine Rohrplatte (5) mit Durchtrittsöffnungen (6) sowie mindestens ein Dichtelement (7) mit Durchtrittsöffnungen (8), wobei das Dichtelement (7) jeweils zwischen einer Außenfläche des zweiten Bereichs (16c, 16d) eines Rohrelements (3, 3c, 3d) und einer Kante eines Randes der Durchtrittsöffnung (6) der Rohrplatte (5) angeordnet ist,
wobei die Rohrelemente (3, 3c, 3d) als Flachrohre
- mit Strömungskanälen für die Leitung des ersten Fluids ausgebildet sind, wobei die Strömungskanäle durch mindestens ein inneres Strukturelement voneinander getrennt sind, und auch
- ebenfalls aus einem Metall ausgebildet sind und der Querschnitt der Rohrelemente (3, 3c, 3d) in dem zweiten Bereich (16c, 16d) in einer senkrecht zu einer Längsrichtung (x) jedes Rohrelements orientierten Ebene aufgeweitet ist,
**dadurch gekennzeichnet, dass** die Rohrelemente (3c) sowohl auf einer Oberseite (10c) als auch auf einer Unterseite (11c) mindestens eine in Längsrichtung (x) verlaufende Nut aufweisen, und dass das innere Strukturelement durch mindestens eine Schweißverbindung in einem Verbindungsbereich (14c, 14d) ausgebildet ist, und
wobei der Verbindungsbereich (14c, 14d) so ausgebildet ist, dass er in einem vorbestimmten Abstand von dem mindestens einen Ende des Rohrelements (3c, 3d) endet, so dass der zweite Bereich (16c, 16d) eine ebene Oberseite (10c, 10d) sowie eine ebene Unterseite (11c, 11d) aufweist.

2. Die Vorrichtung (1) nach Anspruch 1, **dadurch gekennzeichnet, dass** die Schweißverbindung des Rohrelements (3c) durchgehend ausgebildet ist.

3. Die Vorrichtung (1) nach Anspruch 1, **dadurch gekennzeichnet, dass** die Schweißverbindungen des Rohrelements (3d) als geriffelte Schweißpunkte ausgebildet sind.

4. Die Vorrichtung (1) nach einem der Ansprüche 1 bis 3, **dadurch gekennzeichnet, dass** die Rohrplatte (5, 5a) als ein Seitenwandelement eines Kollektors (9) der Vorrichtung (1) ausgebildet ist.

5. Die Vorrichtung (1) nach Anspruch 4, **dadurch gekennzeichnet, dass** zwei Rohrplatten (5, 5a) mit Durchgangsöffnungen (6, 6a) sowie zwei Dichtelemente (7, 7a) mit Durchgangsöffnungen (8, 8a) ausgebildet sind, wobei die Rohrplatten (5, 5a) jeweils fluiddicht mit den Rohrelementen (3, 3a) verbunden sind und die Durchgangsöffnungen (6, 6a) jeweils so ausgebildet sind, dass sie in ihrer Form einer äußeren Form der Rohrelemente (3, 3a) entsprechen und jedes Rohrelement (3, 3a) mit einem ersten Ende durch eine in einer ersten Rohrplatte (5, 5a) ausgebildete Durchgangsöffnung (6, 6a) und mit einem zweiten Ende durch eine in einer zweiten Rohrplatte (5, 5a) ausgebildete Durchgangsöffnung (6, 6a) geführt angeordnet ist.

6. Die Vorrichtung (1) nach einem der Ansprüche 1 bis 5, **dadurch gekennzeichnet, dass** die aus den Rohrelementen (3, 3a) gebildete Baugruppe (2) als einreihige oder mehrreihige Baugruppe ausgebildet ist.

7. Die Vorrichtung (1) nach einem der Ansprüche 1 bis 6, **dadurch gekennzeichnet, dass** die Rohrelemente (3, 3a) aus einer Aluminiumlegierung hergestellt sind.

8. Die Vorrichtung (1) nach Anspruch 6 oder 7, **dadurch gekennzeichnet, dass** die Rohrelemente (3, 3a) in einer Reihe nebeneinander und parallel sowie mit ihren Breitseiten zueinander ausgerichtet sind, so dass zwischen unmittelbar nebeneinander angeordneten Rohrelementen (3, 3a) jeweils ein Strömungsweg für das zweite Fluid ausgebildet ist.

9. Die Vorrichtung (1) nach Anspruch 8, **dadurch gekennzeichnet, dass** in den Strömungswegen von nebeneinander angeordneten Rohrelementen (3, 3a) Lamellen (4) oder Rippen zur Veränderung des Strömungsquerschnitts und/oder zur Vergrößerung der Fläche für den Wärmeübergang angeordnet sind.

10. Die Vorrichtung (1) nach Anspruch 9, **dadurch gekennzeichnet, dass** die Lamellen (4) oder Rippen aus einer Aluminiumlegierung ausgebildet sind.

11. Verwendung einer Vorrichtung (1) zur Wärmeübertragung nach einem der Ansprüche 1 bis 10 als Kühlmittel-Luft-Wärmetauscher wie in einem der Ansprüche 1 bis 20 in einem Kühlmittelkreislauf, insbesondere in einem Motorkühlmittelkreislauf eines Kraftfahrzeugs.

12. Ein System zur Herstellung einer Vorrichtung (1) zur Wärmeübertragung nach einem der Ansprüche 1 bis 10, mit Lötwerkzeugen zum Verbinden einer Anordnung von Rohrelementen (3, 3a, 3b, 3c, 3d) mit beabstandeten Lamellen (4) sowie mit Mitteln zum Aufweiten von Enden der Rohrelemente (3, 3a, 3b, 3c, 3d) zum Verbinden der Rohrelemente (3, 3a, 3b, 3c, 3d) mit einer Rohrplatte (5, 5a, 5b), wobei
- die Lötwerkzeuge mit einem Halterahmen (22) mit mindestens einem Rohrbefestigungselement (23) zum Halten der Rohrelemente (3, 3a, 3b, 3c, 3d) an einer Stirnseite sowie an dem Rohrbefestigungselement (23) ausgebildeten Steckelementen (24) ausgebildet sind, wobei die Rohrelemente (3, 3a, 3b, 3c, 3d) mit dem offenen Querschnitt der Stirnseite auf die Steckelemente (24) aufsteckbar sind,
- die Mittel zum Aufweiten der Enden der Rohrelemente (3, 3a, 3b, 3c, 3d) aus einem Stanzelement (18b) mit Führungselementen (20b) und Aufweitungselementen (21b) oder mit Stiftelementen (25) zum Durchstoßen der offenen Querschnitte der Stirnflächen der Rohrelemente (3, 3a, 3b, 3c, 3d) mit einem ersten Ende ausgebildet sind,
- wobei die Führungselemente (20b) in Verbindung mit den Aufweitungselementen (21b) oder den Stiftelementen (25) entsprechend der Anordnung der Rohrelemente (3, 3a, 3b, 3c, 3d) voneinander beabstandet ausgerichtet sind und die Stiftelemente (25) durch ein Basiselement (26) fixiert und über ein Verbindungselement (27) an zweiten Enden, die distal zu den ersten Enden ausgebildet sind, miteinander gekoppelt sind.

13. Das System nach Anspruch 12, **dadurch gekennzeichnet, dass** die Rohrbefestigungselemente (23) in einer Längsrichtung (x) der Rohrelemente (3, 3a, 3b, 3c, 3d) an dem Halterahmen (22) beweglich angeordnet sind.

14. Das System nach Anspruch 13, **dadurch gekennzeichnet, dass** die Rohrbefestigungselemente (23) jeweils über mit einem Langloch ausgebildete Schraubverbindungen fest an dem Halterahmen (22) angeordnet sind.

15. Das System nach einem der Ansprüche 12 bis 14, **dadurch gekennzeichnet, dass** die Stiftelemente (25) über Sicherungselemente (28) mit dem Verbindungselement (27) verbunden sind.

16. Das System nach Anspruch 15, **dadurch gekennzeichnet, dass** die Sicherungselemente (28) als Nieten oder Bolzen oder Schrauben ausgebildet sind.

17. Ein Verfahren zur Herstellung einer Vorrichtung (1) zur Wärmeübertragung nach einem der Ansprüche 1 bis 10, umfassend die folgenden Schritte:
- das Ausbilden von Rohrelementen (3a) mit jeweils einem Anschlussbereich (14a) mit einem Spalt an einer Oberseite (10a) durch Fräsen und Falten sowie Schließen des Spaltes sowie Hobeln der Oberfläche der Oberseite (10a) mittels Schweißen, insbesondere Laserschweißen, oder Ausbilden eines Rohrelementes (3c, 3d) mit Nuten und Schweißen innerhalb der Nuten,
- das Verbinden einer Vielzahl von Rohrelementen (3, 3a, 3b, 3c, 3d) zu einer Baugruppe durch Löten,
- das Ausrichten der Baugruppe aus Rohrelementen (3, 3a, 3b, 3c, 3d), aus Dichtungselement (7, 7a, 7b) und einer Rohrplatte (5, 5a, 5b) in Bezug auf die Mittel zum Aufweiten der Enden der Rohrelemente (3, 3a, 3b, 3c, 3d), wobei
- das Dichtelement (7, 7a, 7b) an der Rohrplatte (5, 5a, 5b) anliegt und Durchgangsöffnungen (6, 6a, 6b, 8, 8a, 8b) des Dichtelements (7, 7a, 7b) und des Rohrbodens (5, 5a, 5b) miteinander korrespondieren,
- die Rohrelemente (3, 3a, 3b, 3c, 3d) mit zweiten verformbaren Bereichen (16a, 16b, 16c, 16d) durch die Durchgangsöffnungen (6, 6a, 6b, 8, 8a, 8b) ragen und
- Führungselemente (20b) eines Stanzelements (18b) oder Stiftelemente (25) mit ersten Enden angeordnet sind in Richtung offener Endflächen der zweiten, verformbaren Bereiche (16a, 16b, 16c, 16d) der Rohrelemente (3, 3a, 3b, 3c, 3d), wobei die jeweils in eine Richtung ausgerichteten Führungselemente (20b) und Aufweitungselemente (21b) oder die Stiftelemente (25) in einer Längsrichtung (x) der Rohrelemente (3, 3a, 3b, 3c, 3d) ausgerichtet sind und jedem Strömungskanal ein Führungselement (20b) mit einem Aufweitungselement (21b) oder einem Stiftelement (25) zugeordnet ist,
- das Bewegen des Stanzelements (18b) oder der Stiftelemente (25) in einer Bewegungsrichtung (19), wobei in jedem Strömungskanal ein Führungselement (20b) oder ein Stiftelement (25) eingesetzt ist und das Stanzelement (18b) oder das Stiftelement (25) jeweils innerhalb des Strömungskanals zentriert ist, sowie die Aufweitungselemente (21b) oder die Stiftelemente (25) die Querschnitte der Strömungskanäle der Rohrelemente (3, 3a, 3b, 3c, 3d) aufweiten, wobei die Wand des Rohrelements (3, 3a, 3b, 3c, 3d) jeweils gegen den Rand einer Durchgangsöffnung (6, 6a, 6b) der Rohrplatte (5, 5a, 5b) gedrückt wird und das Dichtungselement (7, 7a, 7b) zwischen der Wandung des Rohrelements (3, 3a, 3b, 3c, 3d) und dem Rand der Durchgangsöffnung (6, 6a, 6b) der Rohrplatte (5, 5a, 5b) angeordnet ist, sowie
- das Entfernen des Stanzelements (18b) oder der Stiftelemente (25) aus den Rohrelementen (3, 3a, 3b, 3c, 3d).

## Revendications

1. Dispositif (1) de transfert de chaleur entre un premier fluide et un deuxième fluide, comprenant un ensemble (2) composé de
- éléments tubulaires (3, 3c, 3d) destinés à la conduction du premier fluide et dotés, dans chaque cas, d'une première région non déformée (15c, 15d) et d'au moins une deuxième région déformée (16c, 16d) disposée à une extrémité de l'élément tubulaire (3, 3c, 3d),
- au moins une plaque à tubes (5) dotée d'ouvertures de passage (6) et d'au moins un élément d'étanchéité (7) pourvu d'ouvertures de passage (8), ledit élément d'étanchéité (7) étant, dans chaque cas, disposé entre une surface extérieure de la deuxième région (16c, 16d) d'un élément tubulaire (3, 3c, 3d) et l'arête d'un bord de l'ouverture de passage (6) de la plaque à tubes (5),
étant entendu que les éléments tubulaires (3, 3c, 3d), sous la forme de tubes plats,
- sont dotés de canaux d'écoulement pour la conduction du premier fluide, les canaux d'écoulement étant séparés les uns des autres par au moins un élément de structure interne, et sont également
- réalisés en métal et la section transversale des éléments tubulaires (3, 3c, 3d) est évasée dans la deuxième région (16c, 16d) dans un plan orienté perpendiculairement à une direction longitudinale (x) de chaque élément tubulaire ;
**caractérisé en ce que** les éléments tubulaires (3c) comprennent au moins une rainure s'étendant dans la direction longitudinale (x) sur un côté supérieur (10c) ainsi que sur un côté inférieur (11c), et **en ce que** l'élément de structure interne est réalisé par au moins un raccord soudé dans une région de raccord (14c, 14d) ;
ladite région de raccord (14c, 14d) étant réalisée de façon à se terminer à une distance prédéterminée de l'au moins une extrémité de l'élément tubulaire (3c, 3d), de sorte que la deuxième région (16c, 16d) présente un côté supérieur (10c, 10d) plan ainsi qu'un côté inférieur (11c, 11d) plan.

2. Dispositif (1) selon la revendication 1, **caractérisé en ce que** le raccord soudé de l'élément tubulaire (3c) est réalisé de façon à s'étendre de manière continue.

3. Dispositif (1) selon la revendication 1, **caractérisé en ce que** les raccords soudés de l'élément tubulaire (3d) sont réalisés sous la forme d'un motif de soudure par points cannelé.

4. Dispositif (1) selon l'une quelconque des revendications 1 à 3, **caractérisé en ce que** la plaque à tubes (5, 5a) est réalisée sous la forme d'un élément de paroi latérale d'un collecteur (9) du dispositif (1).

5. Dispositif (1) selon la revendication 4, **caractérisé en ce que** deux plaques à tubes (5, 5a) sont réalisées avec des ouvertures de passage (6, 6a) ainsi que deux éléments d'étanchéité (7, 7a) dotés d'ouvertures de passage (8, 8a), lesdites plaques à tubes (5, 5a) étant, dans chaque cas, raccordées aux éléments tubulaires (3, 3a) de manière étanche aux fluides, et les ouvertures de passage (6, 6a) étant chacune réalisées de manière à correspondre par leur forme à la forme extérieure des éléments tubulaires (3, 3a), et chaque élément tubulaire (3, 3a) étant disposé après avoir été guidé, par une première extrémité, à travers une ouverture de passage (6, 6a) réalisée dans une première plaque à tubes (5, 5a) et, par une deuxième extrémité, à travers une ouverture de passage (6, 6a) réalisée dans une deuxième plaque à tubes (5, 5a).

6. Dispositif (1) selon l'une quelconque des revendications 1 à 5, **caractérisé en ce que** l'ensemble (2) composé des éléments tubulaires (3, 3a) est réalisé sous la forme d'un ensemble à une ou plusieurs rangées.

7. Dispositif (1) selon l'une quelconque des revendications 1 à 6, **caractérisé en ce que** les éléments tubulaires (3, 3a) sont réalisés en alliage d'aluminium.

8. Dispositif (1) selon la revendication 6 ou 7, **caractérisé en ce que** les éléments tubulaires (3, 3a) sont agencés adjacents et parallèles dans une rangée avec leurs côtés larges dirigés l'un vers l'autre, permettant dans chaque cas la réalisation d'une voie d'écoulement pour le deuxième fluide entre des éléments tubulaires (3, 3a) directement adjacents.

9. Dispositif (1) selon la revendication 8, **caractérisé en ce que** des ailettes (4) ou des nervures sont disposées dans les voies d'écoulement des éléments tubulaires (3, 3a) adjacents afin de modifier la section transversale de l'écoulement et/ou d'agrandir la surface pour le transfert de chaleur.

10. Dispositif (1) selon la revendication 9, **caractérisé en ce que** les ailettes (4) ou nervures sont réalisées en alliage d'aluminium.

11. Utilisation d'un dispositif (1) de transfert de chaleur selon l'une quelconque des revendications 1 à 10 en tant qu'échangeur de chaleur air-liquide de refroidissement selon l'une quelconque des revendications 1 à 20 dans un circuit de liquide de refroidissement, notamment dans un circuit de refroidissement de moteur d'un véhicule automobile.

12. Système de fabrication d'un dispositif (1) de transfert de chaleur selon l'une quelconque des revendications 1 à 10, comprenant des outils de soudure pour relier un ensemble d'éléments tubulaires (3, 3a, 3b, 3c, 3d) à des ailettes (4) intercalées ainsi que des moyens pour évaser les extrémités des éléments tubulaires (3, 3a, 3b, 3c, 3d) pour raccorder les éléments tubulaires (3, 3a, 3b, 3c, 3d) à une plaque à tubes (5, 5a, 5b) ; et dans lequel
- les outils de soudure sont réalisés avec un cadre de retenue (22) doté d'au moins un élément de fixation de tubes (23) servant à retenir les éléments tubulaires (3, 3a, 3b, 3c, 3d) sur une face terminale ainsi que sur des éléments enfichables (24) réalisés sur ledit élément de fixation de tubes (23), lesdits éléments tubulaires (3, 3a, 3b, 3c, 3d) étant enfichables, par la section transversale ouverte de leur face terminale, sur les éléments enfichables (24),
- les moyens pour évaser les extrémités des éléments tubulaires (3, 3a, 3b, 3c, 3d) se composent d'un élément d'emboutissage (18b) doté d'éléments de guidage (20b) et d'éléments d'évasement (21b) ou doté d'éléments de pointe (25) destinés à pénétrer, par une première extrémité, dans les sections transversales ouvertes des faces terminales des éléments tubulaires (3, 3a, 3b, 3c, 3d) ;
- lesdits éléments de guidage (20b) en lien avec les éléments d'évasement (21b), ou les éléments de pointe (25), étant orientés en correspondance avec la disposition des éléments tubulaires (3, 3a, 3b, 3c, 3d) espacés les uns des autres, et les éléments de pointe (25) étant fixés par un élément de base (26) et couplés les uns aux autres par un élément de raccord (27) au niveau de deuxièmes extrémités distales des premières extrémités.

13. Système selon la revendication 12, **caractérisé en ce que** les éléments de fixation de tubes (23) sont disposés sur le cadre de retenue (22) de manière mobile dans une direction longitudinale (x) des éléments tubulaires (3, 3a, 3b, 3c, 3d).

14. Système selon la revendication 13, **caractérisé en ce que** les éléments de fixation de tubes (23) sont disposés de manière fixe sur le cadre de retenue (22), chacun grâce à des raccords à boulon dotés d'un trou allongé.

15. Système selon l'une quelconque des revendications 12 à 14, **caractérisé en ce que** les éléments de pointe (25) sont raccordés à l'élément de raccord (27) grâce à des éléments de fixation (28).

16. Système selon la revendication 15, **caractérisé en ce que** les éléments de fixation (28) sont réalisés sous forme de rivets, de boulons ou de vis.

17. Procédé de fabrication d'un dispositif (1) de transfert de chaleur selon l'une quelconque des revendications 1 à 10, comprenant les étapes suivantes :
- la formation d'éléments tubulaires (3a), chacun doté d'une région de raccord (14a) présentant un espace sur une face supérieure (10a), par fraisage et pliage, ainsi que la fermeture de l'espace et le rabotage de la surface de la face supérieure (10a) par soudage, notamment par soudage au laser, ou la formation d'un élément tubulaire (3c, 3d) doté de rainures et le soudage à l'intérieur de ces rainures ;
- le raccord d'une pluralité d'éléments tubulaires (3, 3a, 3b, 3c, 3d) en un ensemble, par soudage ;
- l'alignement de l'ensemble d'éléments tubulaires (3, 3a, 3b, 3c, 3d), d'un élément d'étanchéité (7, 7a, 7b) et d'une plaque à tubes (5, 5a, 5b) par rapport aux moyens pour évaser les extrémités des éléments tubulaires (3, 3a, 3b, 3c, 3d), dans le cadre de quoi
- l'élément d'étanchéité (7, 7a, 7b) repose contre la plaque à tubes (5, 5a, 5b) et les ouvertures de passage (6, 6a, 6b, 8, 8a, 8b) de l'élément d'étanchéité (7, 7a, 7b) et de la plaque à tubes (5, 5a, 5b) se correspondent entre elles,
- les éléments tubulaires (3, 3a, 3b, 3c, 3d) font saillie à travers les ouvertures de passage (6, 6a, 6b, 8, 8a, 8b) par des deuxièmes régions déformables (16a, 16b, 16c, 16d), et
- les éléments de guidage (20b) d'un élément d'emboutissage (18b) ou les éléments de pointe (25) sont disposés avec leurs premières extrémités dirigées vers les faces terminales ouvertes des deuxièmes régions déformables (16a, 16b, 16c, 16d) des éléments tubulaires (3, 3a, 3b, 3c, 3d), lesdits éléments de guidage (20b) respectivement orientés dans une direction et les éléments d'évasement (21b) ou éléments de pointe (25) sont orientés dans une direction longitudinale (x) des éléments tubulaires (3, 3a, 3b, 3c, 3d), et un élément de pointe (25) ou un élément de guidage (20b) pourvu d'un élément d'évasement (21b) est assigné à chaque canal d'écoulement ;
- le déplacement d'un élément d'emboutissage (18b) ou des éléments de pointe (25) dans une direction de mouvement (19), un élément de guidage (20b) ou un élément de pointe (25) étant inséré dans chaque canal d'écoulement, et l'élément d'emboutissage (18b) ou l'élément de pointe (25) étant respectivement centré dans le canal d'écoulement, les éléments d'évasement (21b) ou les éléments de pointe (25) évasant les sections transversales des canaux d'écoulement des éléments tubulaires (3, 3a, 3b, 3c, 3d), ladite paroi de l'élément tubulaire (3, 3a, 3b, 3c, 3d) étant, dans chaque cas, pressée contre le bord d'une ouverture de passage (6, 6a, 6b) de la plaque à tubes (5, 5a, 5b) et l'élément d'étanchéité (7, 7a, 7b) étant disposé entre la paroi de l'élément tubulaire (3, 3a, 3b, 3c, 3d) et la bordure de l'ouverture de passage (6, 6a, 6b) de la plaque à tubes (5, 5a, 5b) ; et
- le retrait de l'élément d'emboutissage (18b) ou des éléments de pointe (25) hors des éléments tubulaires (3, 3a, 3b, 3c, 3d).
